Europäisches Patentamt

European Patent Office

Office européen des brevets

(19)

(11) Veröffentlichungsnummer : **0 028 784**
**B2**

(12) # NEUE EUROPÄISCHE PATENTSCHRIFT

(45) Veröffentlichungstag der neuen Patentschrift :
03.01.90

(51) Int. Cl.⁵ : **H 02 M   1/08**

(21) Anmeldenummer : 80106737.2

(22) Anmeldetag : 03.11.80

(54) Thyristorventil für Hochspannungsstromrichter.

(30) Priorität : 12.11.79 SE 7909313

(43) Veröffentlichungstag der Anmeldung :
20.05.81 Patentblatt 81/20

(45) Bekanntmachung des Hinweises auf die Patenterteilung : 13.04.83 Patentblatt 83/15

(45) Bekanntmachung des Hinweises auf die Entscheidung
über den Einspruch : 03.01.90 Patentblatt 90/01

(84) Benannte Vertragsstaaten :
CH DE FR GB LI

(56) Entgegenhaltungen :
CH–A–   444 287
DE–A– 2 417 575
DE–C– 1 538 099
FR–A– 2 170 124
GB–A– 1 251 965
SE–A– 3 536 25
US–A– 3 878 451
"Direct Current", Bd.2, Nr.4, 1971, Seite 134

(73) Patentinhaber : ASEA AB

S-721 83 Västeras (SE)

(72) Erfinder : Asplund, Gunnar, Dipl.-Ing.
Bromsvägen 11
S-77100 Ludvika (SE)

(74) Vertreter : Boecker, Joachim, Dr.-Ing.
Rathenauplatz 2-8
D-6000 Frankfurt a.M. 1 (DE)

EP 0 028 784 B2

## Beschreibung

Die Erfindung betrifft ein Thyristorventil für Hochspannungsstromrichter gemäß dem Oberbegriff des Anspruches 1.

Thyristorventile dieser Art sind bereits bekannt (z. B. FR-A-2 170 124 und DE-A-2 417 575). In gewissen Fällen, beispielsweise bei einer transienten Überspannung, ist eine sehr schnelle Zündung zumindest eines oder einiger der Thyristoren des Ventils erforderlich. Tritt eine solche Überspannung auf, wenn der genannte Kondensator zur Speisung des Steuergliedes nicht aufgeladen ist, so dauert es aufgrund der Impedanz des Spannungsteilers eine gewisse Zeit, bis der Kondensator auf eine solche Spannung aufgeladen ist, daß das Steuerglied funktionsfähig wird und die Zündung des Thyristors erfolgen kann. Bei schnell anwachsenden Überspannungen können daher die Thyristoren bei Ventilen dieser Art zerstört werden, bevor sie von ihren Steuergliedern gezündet werden.

Der Erfindung liegt die Aufgabe zugrunde, ein Thyristorventil der eingangs genannten Art zu schaffen, bei dem stets eine ausreichende Speisespannung für das Steuerglied zur Zündung des Thyristors vorhanden ist, bevor die Spannung am Thyristor einen gefährlichen Wert erreichen kann.

Zur Lösung dieser Aufgabe wird ein Thyristorventil nach dem Oberbegriff des Anspruches 1 vorgeschlagen, welches die im kennzeichnenden Teil des Anspruches 1 genannten Merkmale hat.

Eine vorteilhafte Weiterbildung der Erfindung ist im Anspruch 2 genannt.

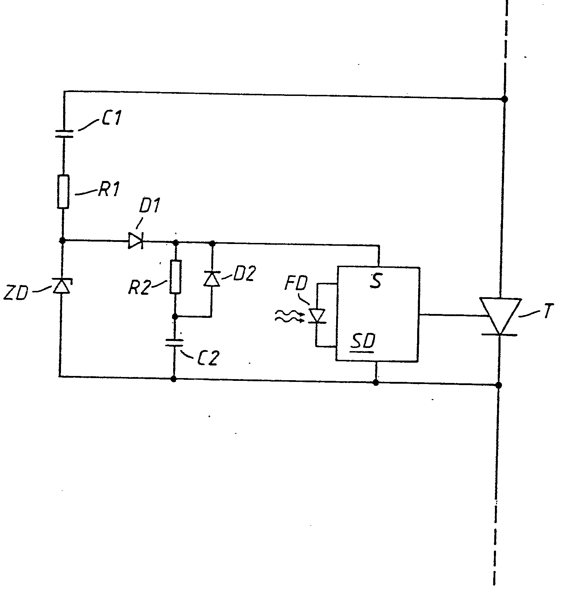

Anhand des in der Figur gezeigten Ausführungsbeispieles gemäß der Erfindung soll diese näher erläutert werden. Die Figur zeigt einen Thyristor eines Thyristorventils gemäß der Erfindung mit zugehörigem Steuerglied und Spannungsteiler.

Der Thyristor T ist einer der in Reihe geschalteten Thyristoren, die zu dem Ventil gehören. Der Thyristor ist mit einem an den Steuereingang des Thyristors angeschlossenen Steuerglied SD zur Zündung des Thyristors versehen. Die Zündung des Thyristors erfolgt normalerweise beim Empfang eines optischen Zündsignals durch die Fotodiode FD. Um den Thyristor während seines Sperrzustandes gegen Überspannungen zu schützen, dient das Steuerglied auch dazu, den Thyristor zu zünden, sobald die Sperrspannung am Thyristor einen festgelegten Wert erreicht hat.

Parallel zum Thyristor liegt ein aus dem Kondensator C1, dem Widerstand R1 und der Zenerdiode ZD bestehender Spannungsteiler. Der Kondensator C2, der als Energiespeicher für das Steuerglied dient, wird über eine Diode D1 aufgeladen, die mit ihrer Anode zwischen dem Widerstand R1 und der Zenerdiode ZD des Spannungsteilers angeschlossen ist. In Reihe mit dem Kondensator C2 liegt ein Widerstand R2. Parallel zu diesem Widerstand liegt eine Diode D2, über welche der Kondensator C2 über den Speiseeingang S des Steuergliedes SD entladen werden kann. Bei einer relativ langsam anwachsenden Überspannung kann der Kondensator C2 auf eine für die Funktion des Steuergliedes ausreichende Spannung aufgeladen werden, bevor die Thyristorspannung schädliche Werte erreicht, und bei einer Zündung des Thyristors wird der Kondensator über die Diode D2 schnell zum Steuerglied. und durch dieses über den Steuereingang des Thyristors entladen. Bei einer sehr schnell anwachsenden Überspannung kann der Kondensator C2 nicht schnell genug aufgeladen werden. Über dem Widerstand R2 erhält man jedoch kurzzeitig einen Spannungsabfall und damit eine Speisespannung für das Steuerglied. Der Wert des Widerstandes R2 wird den Impedanzen des Spannungsteilers derart angepaßt, daß stets eine ausreichend große Speisespannung für das Steuerglied am Widerstand R2 abfällt, bevor die Spannung am Thyristor einen gefährlichen Wert erreichen kann.

Auf die Parallelschaltung der Diode D2 kann in gewissen Fällen, beispielsweise bei einem niedrigen Widerstandswert des Widerstandes R2, verzichtet werden.

## Patentansprüche

1. Thyristorventil für Hochspannungsstromrichter mit mehreren in Reihe geschalteten Thyristoren (T) und mit parallel zu den Thyristoren angeschlossenen Spannungsteilern (C1, R1, ZD), wobei jedem Thyristor zur Speisung seines Steuergliedes (SD) die Reihenschaltung eines hierfür bemessenen Kondensators (C2) und eines Widerstandes (R2) zugeordnet ist, die über ein Gleichrichterelement (D1), das beim Auftreten einer negativen Spannung zwischen Anode und Kathode des Thyristors eine Entladung des Kondensators (C2) verhindert, an eine Impedanz (ZD) des Spannungteilers angeschlossen ist, an der beim Auftreten einer positiven Spannung zwischen Anode und Kathode des Thyristors augenblicklich eine eine Aufladung des Kondensators (C2) bewirkende Spannung abfällt, dadurch gekennzeichnet, daß neben der Reihenschaltung aus Widerstand (R2) und Kondensator (C2) auch ein Speiseeingang (S) des Steuergliedes (SD) an die Kathode des die Entladung des Kondensators (C2) verhindernden Gleichrichterelementes (D1) angeschlossen ist, und daß der Wert des Widerstandes (R2) den Impedanzen des Spannungsteilers derart angepaßt ist, daß auch bei entladenem Kondensator (C2) eine ausreichend große Speisespannung für das Steuerglied am Widerstand (R2) abfällt, bevor die Spannung am Thyristor einen gefährlichen Wert erreichen kann.

2. Thyristorventil nach Anspruch 1, dadurch gekennzeichnet, daß eine Diode (D2) zur schnellen Entladung des Kondensators (C2) über das Steuerglied zu dem Widerstand (R2) parallelgeschaltet ist.

## Claims

1. Thyristor. valve for high voltage power convertors with a plurality of series-connected thyristors (T) and with voltage dividers (C1, R1, ZD) connected in parallel with said thyristors, whereby each thyristor, in order to supply its control circuit (SD), is provided with a series-connection of a correspondingly dimensioned capacitor (C2) and resistor (R2), which series-connection is connected, via a rectifier element (D1) which prevents the discharge of the capacitor (C2) when a negative voltage appears between the anode and the cathode of the thyristor, to an impedance (ZD) of the voltage divider across which impedance (ZD), on appearing of a positive voltage between the anode and the cathode of the thyristor, instantaneously appears a voltage drop which brings about the charging of the capacitor (C2), characterized in that in addition to the series-connection of said resistor (R2) and said capacitor (C2), there is also connected a supply input (S) of the control circuit (SD) to the cathode of said rectifier element (D1) preventing the discharge of the capacitor (C2), and that the value of the resistor (R2) is adjusted to the impedances of the voltage divider such that even when the capacitor (C2) is in a discharged state there will appear across the resistor (R2) a sufficiently large supply voltage for the control circuit before the voltage across the thyristor is able to attain a hazardous value.

2. Thyristor according to claim 1, characterized in that a diode (D2) is connected in parallel to said resistor (R2) to allow a rapid discharge of the capacitor (C2) across the control device.

## Revendications

1. Valve à thyristors pour convertisseurs de courant haute tension, comportant plusieurs thyristors montés en série et des diviseurs de tension (C1, R1, ZD) montés en parallèle sur les thyristors, à chaque thyristor étant associé, pour l'alimentation de son dispositif de commande (SD), le montage série d'un condensateur (C2), dimensionné à cet effet, et d'une résistance (R2), qui, par l'intermédiaire d'un élément redresseur (D1), empêche à l'apparition d'une tension négative entre l'anode et la cathode du thyristor, une décharge du condensateur (C2), étant relié à une indépendance (ZD) au niveau de laquelle chute instantanément, à l'apparition d'une tension positive entre l'anode et la cathode du thyristor, une tension provoquant la charge du condensateur (C2), caractérisée par le fait qu'il est prévu, en plus du circuit série formé par la résistance (R2) et le condensateur (C2), également une entrée d'alimentation (S) du dispositif d'alimentation (SD) reliée à la cathode de l'élément redresseur (D1) qui empêche la décharge du condensateur (C2), et que la valeur de la résistance (R2) est adaptée de telle façon aux impédances des diviseurs de tension que même dans le cas où le condensateur (C2) est déchargé, une tension d'alimentation assez importante pour l'organe de commande chute aux bornes de la résistance (R2), avant que la tension aux bornes du thyristor puisse atteindre une valeur dangereuse.

2. Valve à thyristors selon la revendication 1, caractérisée en ce qu'une diode (D2) est branchée en parallèle sur la résistance (R2) pour permettre une décharge rapide du condensateur (C2) à travers le dispositif de commande.